# EUROPEAN PATENT APPLICATION

(11) **EP 2 629 575 A1**
(43) Date of publication of application: **21.08.2013**
(21) Application number: 13154774.7
(22) Date of filing: 11.02.2013
(51) Int. Cl.: H04W 60/00

(54) **Method of accessing CS service in NMO I congestion and related communication device**

(30) Priority: 15.02.2012 US 201261598913 P; 07.02.2013 US 201313761164
(71) Applicant: HTC Corporation, Taoyuan County 330 (TW)
(72) Inventor: Tiwari, Kundan, 330 Taoyuan City (TW)
(74) Representative: Konkonen, Tomi-Matti Juhani

(57) **Abstract**

A method of handling a registration procedure for accessing a circuit-switched (CS) service for a communication device of a wireless communication system is disclosed. The communication device operates in a network mode of operation I (NMO I), and the method comprises maintaining a packet-switched (PS) back-off timer triggered by a network of the wireless communication system, when the network is in congestion in a PS domain; and initiating the registration for the CS service with the network, before the PS back-off timer expires.

## Description

### Cross Reference To Related Applications

This application claims the benefit of U.S. Provisional Application No. 61/598,913, filed on Feb. 15, 2012 and entitled "Method to handle Manual PLMN selection procedure in NMO I during congestion", the contents of which are incorporated herein in their entirety.

### Background of the Invention

### 1. Field of the Invention

The present invention relates to a method used in a wireless communication system and related communication device, and more particularly, to a method and communication device of accessing a CS service when the communication device operates in a network mode of operation I (NMO I) and a network communicating with the communication device is in congestion in a packet-switched (PS) domain.

### 2. Description of the Prior Art

The 3rd Generation Partnership Project (3GPP) has developed a universal mobile telecommunications system (UMTS) which adopts a wideband code division multiple access (WCDMA) as a wireless air interface. In the UMTS, a radio access network known as a universal terrestrial radio access network (UTRAN) includes multiple Node-Bs (NBs) for communicating with multiple user equipments (UEs) (i.e., mobile stations (MSs)). As a successor of a General Packet Radio Service (GPRS) system, the UMTS provides high frequency spectrum utilization, universal coverage, and high-speed multimedia data transmission which are beneficial for the UEs and the NBs of the UMTS. Please note that, the UMTS and the GPRS system can support both a packet-switch (PS) service and a circuit-switch (CS) service, while systems older than the GPRS system support only the CS service.

A long-term evolution (LTE) system supporting the 3GPP Rel-8 standard and/or the 3GPP Rel-9 standard are developed by the 3GPP as a successor of the UMTS, for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved UTRAN (E-UTRAN) includes multiple evolved Node-Bs (eNBs) for communicating with multiple UEs, and communicating with a core network including a mobility management entity (MME), a serving gateway, etc., for Non-Access Stratum (NAS) control.

In the abovementioned systems, congestion of a network (i.e., the radio access network and/or the core network) can be controlled by using a mobility management back-off timer. In detail, when a UE transmits a signaling (e.g., for initiating a procedure/session) to the network, the network replies a rejection signaling including the mobility management back-off timer if the network is in congestion. The UE can retransmit the signaling, after the mobility management back-off timer expires (i.e., stops running). Alternatively, the UE can stop the mobility management back-off timer, when the network transmits a paging signaling (e.g., for initiating a procedure/session) to the UE. That is, the mobility management back-off timer can be stopped by the network-initiated procedure.

However, when the UE operates in a network mode of operation I (NMO I), the UE needs to perform a combined attach procedure for accessing CS and PS services, e.g., international mobile subscriber identity (IMSI)/GPRS services. In this situation, if the network is in congestion in a PS domain and a PS back-off timer is running, the UE is not allowed to initiate any PS signaling. That is, the UE is not allowed to access a CS service (e.g., via performing a manual public land mobile network (PLMN) selection), since the UE is not allowed to initiate any PS signaling. In other words, even if the network is only in congestion in the PS domain, the UE is unable to access the CS service since the UE operates in the NMO I. Thus, accessing the CS service when the UE operates in the NMO I and the network is in congestion in the PS domain is a problem to be discussed and solved.

### Summary of the Invention

The present invention therefore provides a method and related communication device for accessing a CS service to solve the abovementioned problem.

A method of handling a registration procedure for accessing a circuit-switched (CS) service for a communication device of a wireless communication system is disclosed. The communication device operates in a network mode of operation I (NMO I), and the method comprises maintaining a packet-switched (PS) back-off timer triggered by a network of the wireless communication system, when the network is in congestion in a PS domain; and initiating the registration for the CS service with the network, before the PS back-off timer expires.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example the present invention.

Fig. 2 is a schematic diagram of a communication device according to an example to the present invention.

Fig. 3 is a flowchart of a process according to an example of the present invention.

### Detailed Description

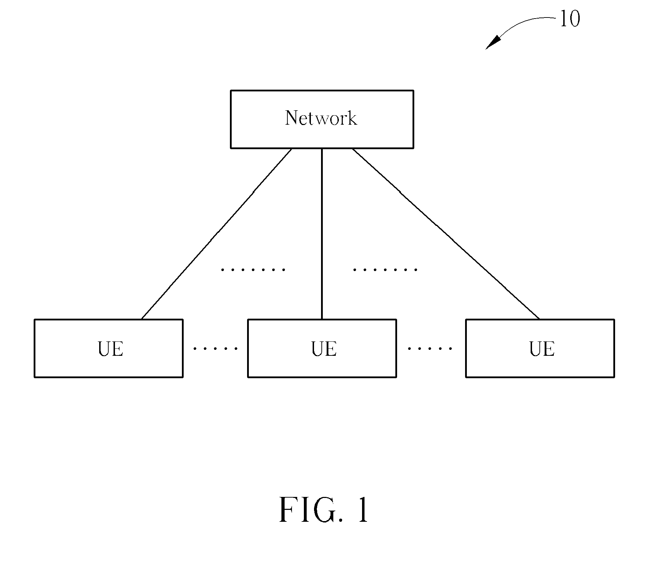

Please refer to Fig. 1, which is a schematic diagram of a wireless communication system 10 according to an example of the present invention. The wireless communication system 10 is briefly composed of a plurality of UEs and a network. The wireless communication system 10 may be a time division multiple access (TDMA) system such as a global system for mobile communications (GSM) system, a general packet radio service (GPRS) system or an enhanced data rates for GSM evolution (EDGE) system. Alternatively, the wireless communication system 10 may be a wideband code division multiple access (WCDMA) system such as a universal mobile telecommunications system (UMTS). Besides, the wireless communication system 10 may be an orthogonal frequency division multiplexing (OFDM) system and/or an orthogonal frequency division multiple access (OFDMA) system, such as a long term evolution (LTE) system (e.g., 3GPP Rel-11 standard), a LTE-Advanced (LTE-A) system or a successor of the LTE-A system. The wireless communication system 10 may also be a system supporting a combination of the abovementioned systems, and is not limited herein. That is, the network supports multiple standards, and can provide various services to UEs.

Please note that, the UEs and the network are simply utilized for illustrating a structure of the wireless communication system 10. Practically, the network can be referred to a plurality of base stations (BSs) in the GSM system, the GPRS system or the EDGE system. Alternatively, the network can also be referred to as a universal terrestrial radio access network (UTRAN) comprising NodeBs (NBs) in the UMTS, or an evolved UTRAN (E-UTRAN) comprising evolved NodeBs (eNBs), relay nodes and/or remote radio heads (RRHs) in the LTE system or the LTE-A system, and are not limited herein. Each of the BSs, the NBs, the eNBs, the relay nodes and/or the RRHs can provide one or more cells to the UE. The UE can be a mobile station (MS) configured as Class A or Class B. The UE can also be mobile devices such as mobile phones, laptops, tablet computers, electronic books, and portable computer systems. Furthermore, the network may further include a mobile switching center (MSC), a serving GPRS support node (SGSN) and/or a core network (e.g., mobility management entity (MME)), for communicating with the UE properly. In another example, the network can also be referred to a public land mobile network (PLMN). Besides, the network and the UE can be seen as a transmitter or a receiver according to transmission directions, e.g., for an uplink (UL), the UE is the transmitter and the network is the receiver, and for a downlink (DL), the network is the transmitter and the UE is the receiver.

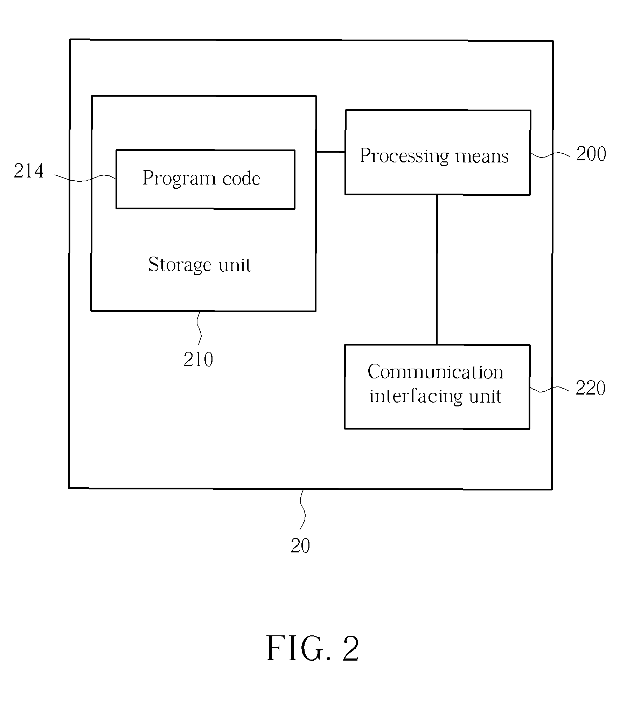

Please refer to Fig. 2, which is a schematic diagram of a communication device 20 according to an example of the present invention. The communication device 20 can be a UE or the network shown in Fig. 1, but is not limited herein. The communication device 20 may include a processing means 200 such as a microprocessor or an Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver, and can transmit and receive wireless signals according to processing results of the processing means 200.

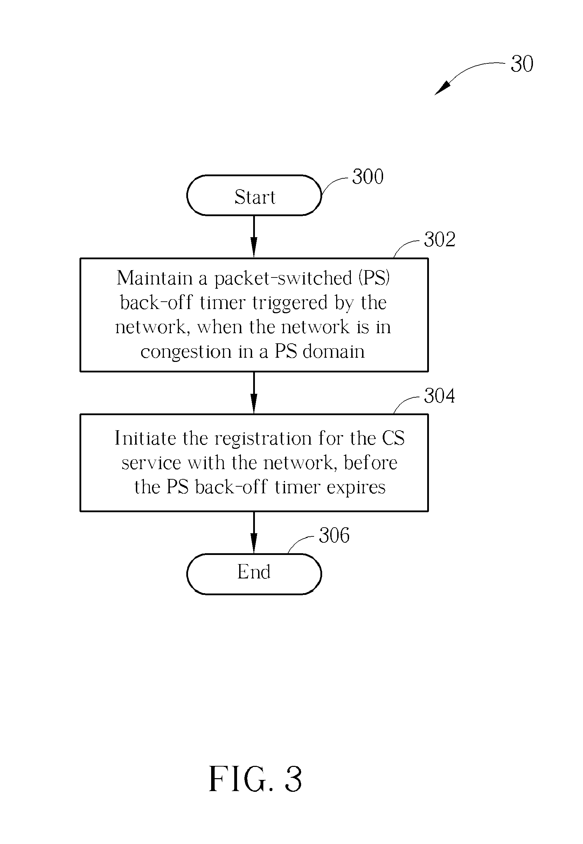

Please refer to Fig. 3, which is a flowchart of a process 30 according to an example of the present invention. The process 30 is utilized in the UE shown in Fig. 1, for handling a registration procedure for accessing a circuit-switched (CS) service for the UE operating in a network mode of operation I (NMO I). The process 30 may be compiled into the program code 214 and includes the following steps:

Step 300: Start.

Step 302: Maintain a packet-switched (PS) back-off timer triggered by the network, when the network is in congestion in a PS domain.

Step 304: Initiate the registration for the CS service with the network, before the PS back-off timer expires.

Step 306: End.

According to the process 30, even if the UE is maintaining a PS back-off timer (e.g., timer T3346 described in the 3GPP standard) triggered by the network when the network is in congestion in a PS domain (i.e., the PS back-off timer is still running), the UE can still initiate the registration for the CS service with the network before the PS back-off timer expires. Thus, the limitation caused by the PS back-off timer in the prior art is removed, and the UE can initiate the registration procedure to access the CS service with the network.

For example, the registration procedure is performed during a manual PLMN selection procedure, when the network is a PLMN. That is, the UE performs the manual PLMN selection procedure for selecting the same network (i.e., the same PLMN), for accessing the CS service provided by the network. On the other hand, the PS back-off timer may be triggered by the network, when the network is in congestion in the PS domain and rejects a mobility management procedure initiated by the UE. Preferably, the mobility management procedure is a combined GPRS mobility management procedure.

Those skilled in the art should readily make combinations, modifications and/or alterations on the abovementioned description and examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method and communication device for accessing the CS service when the communication device operates in the NMO I and the network is in congestion in the PS domain. Thus, the communication device can initiate the registration procedure to access the CS service with the network.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a registration procedure for accessing a circuit-switched (CS) service for a communication device of a wireless communication system, the communication device operating in a network mode of operation I (NMO I), and the method comprising:
maintaining a packet-switched (PS) back-off timer triggered by a network of the wireless communication system, when the network is in congestion in a PS domain; and
initiating the registration procedure for the CS service with the network, before the PS back-off timer expires.

2. The method of claim 1, wherein the registration procedure is performed during a manual public land mobile network (PLMN) selection procedure, when the network is a PLMN.

3. The method of claim 1, wherein the communication device is configured as Class A or Class B.

4. The method of claim 1, wherein the PS back-off timer is triggered by the network, when the network is in congestion in the PS domain and rejects a mobility management procedure initiated by the communication device.

5. The method of claim 4, wherein the mobility management procedure is a combined general packet radio service (GPRS) mobility management procedure.

6. The method of claim 1, wherein the PS back-off timer is a timer T3346 described in the 3GPP standard.

7. A computer program product, comprising program instruction means configured to cause the computer program product to perform the steps of any preceding claim 1-6.

8. A communication device, wherein the communication device is configured to:
handle a registration procedure for accessing a circuit-switched, CS, service for the communication device of a wireless communication system;
operate in a network mode of operation I, NMO I;
maintain a packet-switched, PS, back-off timer triggered by a network of the wireless communication system, when the network is in congestion in a PS domain; and
initiate the registration procedure for the CS service with the network, before the PS back-off timer expires.
